**Europäisches Patentamt**

**European Patent Office**

**Office européen des brevets**

(19)

(11) Veröffentlichungsnummer : **0 361 090 B1**

(12) # EUROPÄISCHE PATENTSCHRIFT

(45) Veröffentlichungstag der Patentschrift :
**04.03.92 Patentblatt 92/10**

(51) Int. Cl.$^5$ : **A01J 25/12**

(21) Anmeldenummer : **89115694.5**

(22) Anmeldetag : **25.08.89**

(54) **Vorrichtung zum dosierten Abfüllen von Käsebruch.**

(30) Priorität : **28.09.88 DE 8812268 U**

(43) Veröffentlichungstag der Anmeldung :
**04.04.90 Patentblatt 90/14**

(45) Bekanntmachung des Hinweises auf die
Patenterteilung :
**04.03.92 Patentblatt 92/10**

(84) Benannte Vertragsstaaten :
**CH DE IT LI NL**

(56) Entgegenhaltungen :
**DE-A- 1 966 433**
**DE-C- 3 637 280**
**FR-A- 2 145 491**
**FR-A- 2 290 148**

(73) Patentinhaber : **Bentele, Hubert**
**Oflingser Weg 10**
**W-7988 Wangen-Deuchelried (DE)**
Patentinhaber : **Mayer, Hansjörg**
**Oflingser Weg 10**
**W-7988 Wangen-Deuchelried (DE)**

(72) Erfinder : **Bentele, Hubert**
**Oflingser Weg 10**
**W-7988 Wangen-Deuchelried (DE)**
Erfinder : **Mayer, Hansjörg**
**Oflingser Weg 10**
**W-7988 Wangen-Deuchelried (DE)**

(74) Vertreter : **Oedekoven, Wolf-Dieter, Dipl. Ing.**
**Erhardtstrasse 8/V**
**W-8000 München 5 (DE)**

EP 0 361 090 B1

EP 0 361 090 B1

## Beschreibung

Die Erfindung bezieht sich auf eine Vorrichtung zum dosierten Abfüllen von Käsebruch aus einem Speisetrichter in eine Reihe einzelner Käseformen mittels zweier Dosierzylinder mit je einem Dosierkolben, welche wechselweise gefüllt und in eine Käseform der schrittweise bewegten Käseformreihe entleert werden.

Eine derartige Vorrichtung ist bekannt (DE-C 36 37 280). Dabei sind die beiden Dosierzylinder an einer Trommel angebracht, um sich innerhalb derselben parallel zueinander und quer zur mittleren Trommellängsachse zu erstrecken. Die Trommel ist zwischen dem Speisetrichter sowie einer Auslaufrutsche angeordnet und im Takte der schrittweise bewegten Käseformreihe jeweils um einen Winkel von 180° drehbar, um den jeweils vor dem Speisetrichter befindlichen und mit einer bestimmten Käsebruchmenge gefüllten Dosierzylinder entlang einer die Trommel umschließenden Wand vor die Auslaufrutsche zu bewegen, so daß der Käsebruch aus dem Dosierzylinder über die Auslaufrutsche in die jeweils unter dieselbe bewegte leere Käseform gelangt, und den jeweils vor der Auslaufrutsche befindlichen, entleerten Dosierzylinder zum neuerlichen Füllen vor den Speisetrichter zu bewegen. Es können mehrere solche Trommeln nebeneinander angeordnet und miteinander verbunden werden, um Käsebruch aus einem gemeinsamen Speisetrichter über je eine Auslaufrutsche in eine entsprechende Anzahl oder eine geringere Anzahl zueinander paralleler Käseformreihen dosiert abzufüllen, wobei im letztgenannten Fall mehrerer Auslaufrutschen zu einer Käseformreihe führen.

Der Erfindung liegt die Aufgabe zugrunde, eine Vorrichtung der eingangs angegebenen Gattung zu schaffen, welche einfach aufgebaut ist, schnell arbeitet, problemlos gereinigt werden kann, schnell und einfach an die unterschiedlichsten Erfordernisse anpaßbar ist, auch durch Bestückung mit entsprechend dimensionierten Dosierzylindern, und wenig Platz beansprucht.

Diese Aufgabe ist durch die im kennzeichnenden Teil des Patentanspruchs 1 angegebenen Merkmale gelöst. Vorteilhafte Ausgestaltungen der erfindungsgemäßen Vorrichtung zum dosierten Abfüllen von Käsebruch sind in den restlichen Patentansprüchen angegeben.

Nachstehend ist eine Ausführungsform der erfindungsgemäßen Vorrichtung zum dosierten Abfüllen von Käsebruch anhand von Zeichnungen beispielsweise beschrieben. Darin zeigt:

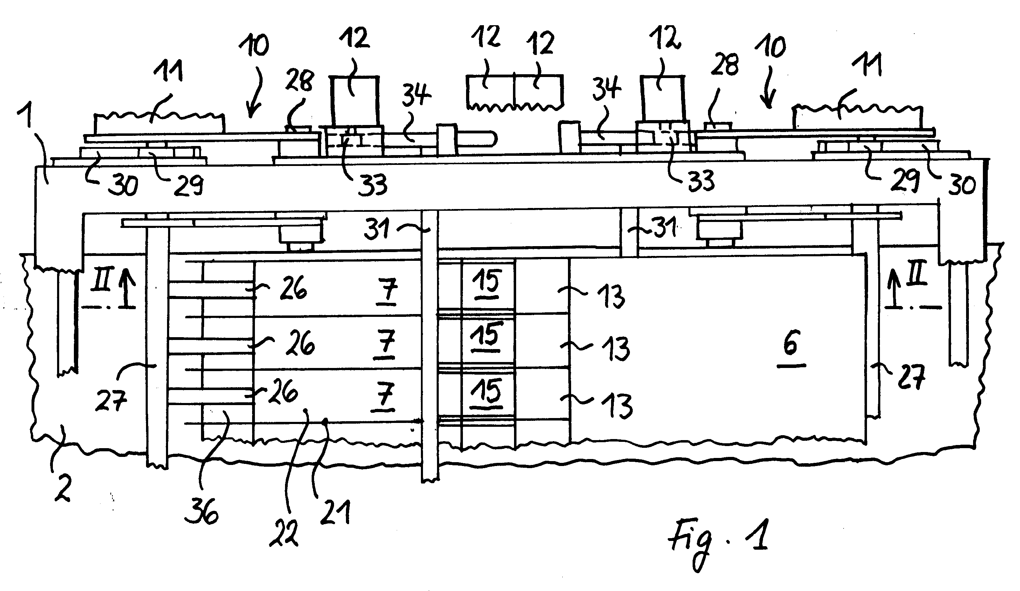

Fig. 1 eine Hälfte einer Draufsicht;

Fig. 2 den Längsschnitt entlang der Linie II-II in Fig. 1; und

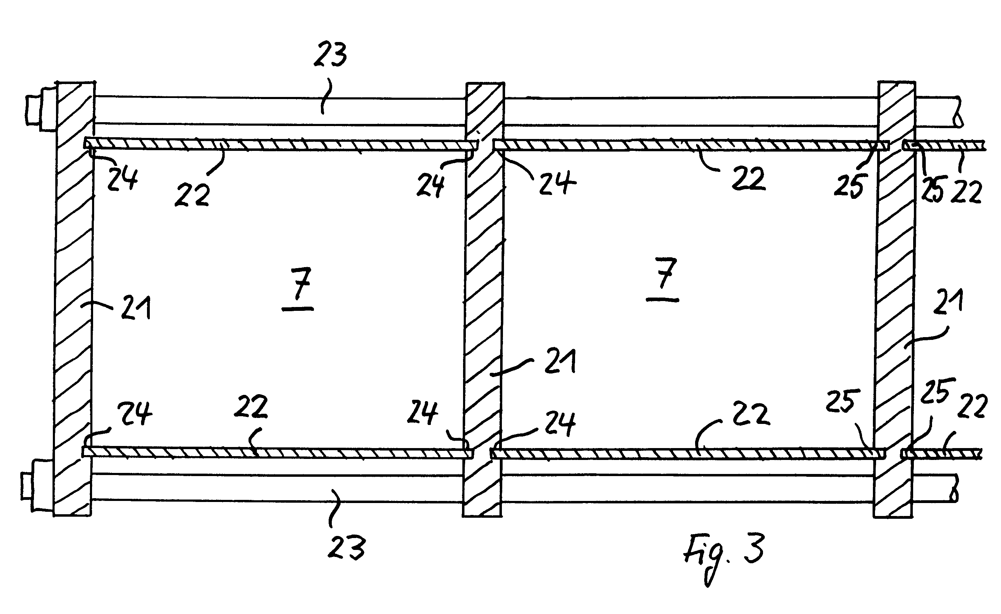

Fig. 3 einen Teil des Querschnitts entlang der Linie III-III in Fig. 2, in größerem Maßstab.

Die dargestellte Vorrichtung weist ein stationäres Gestell 1 auf, welches über nicht dargestellte Beine oder sonstwie abgestützt ist und unter welchem sich eine horizontale Transportbahn 2 zum schrittweisen Vorschub von Blockformen 3 in Richtung des Pfeils 4 erstreckt. Die Blockformen 3 bestehen jeweils aus mehreren parallel zur Vorschubrichtung 4 orientierten Reihen einzelner Käseformen 5, welche im dargestellten Fall jeweils vier einzelne Käseformen 5 umfassen.

Das Gestell 1 trägt einen Speisetrichter 6 zur Aufnahme von Käsebruch, ferner mehrere Dosierzylinder 7 mit je einem Dosierkolben 8 und einen Auslauftrichter 9, wobei die Dosierzylinder 7 mit den Dosierkolben 8 und der Auslauftrichter 9 zu einer Baueinheit zusammengefaßt sind. Weiterhin ist das Gestell 1 mit zwei Betätigungsschwingen 10 für die Dosierkolben 8 mit je einem elektrischen Antriebsmotor 11 und mit vier pneumatischen oder elektrischen Drehmotoren 12 zum Öffnen und Schließen der Dosierzylinder 7 versehen.

Die Dosierzylinder 7 sind paarweise angeordnet, wobei die beiden Dosierzylinder 7 jedes Paares sich in einer vertikalen und zur Vorschubrichtung 4 der Blockformen 3 parallelen Ebene divergierend vom unteren Ende des Speisetrichters 6 weg erstrecken und jeweils kreisbogenförmig gekrümmt sowie an beiden Enden offen sind, einerseits über eine von der Mündung des an den Speisetrichter 6 anschließenden offenen Endes gebildete Einlaßöffnung 13 mit dem Speisetrichter 6 und andererseits über eine etwa auf halber Länge vorgesehene seitliche Auslaßöffnung 14 mit dem Auslauftrichter 9 kommunizieren und mit einem Querschieber 15 zum Verschließen der Einlaßöffnung 13, einer Schwenkklappe 16 zum Verschließen der Auslaßöffnung 14 und einem Molkeeinsprühkopf 17 im Bereich der Auslaßöffnung 14 versehen sind. Die Einlaßöffnungen 13 der beiden Dosierzylinder 7 liegen jeweils in einer von zwei V-förmig orientierten Ebenen.

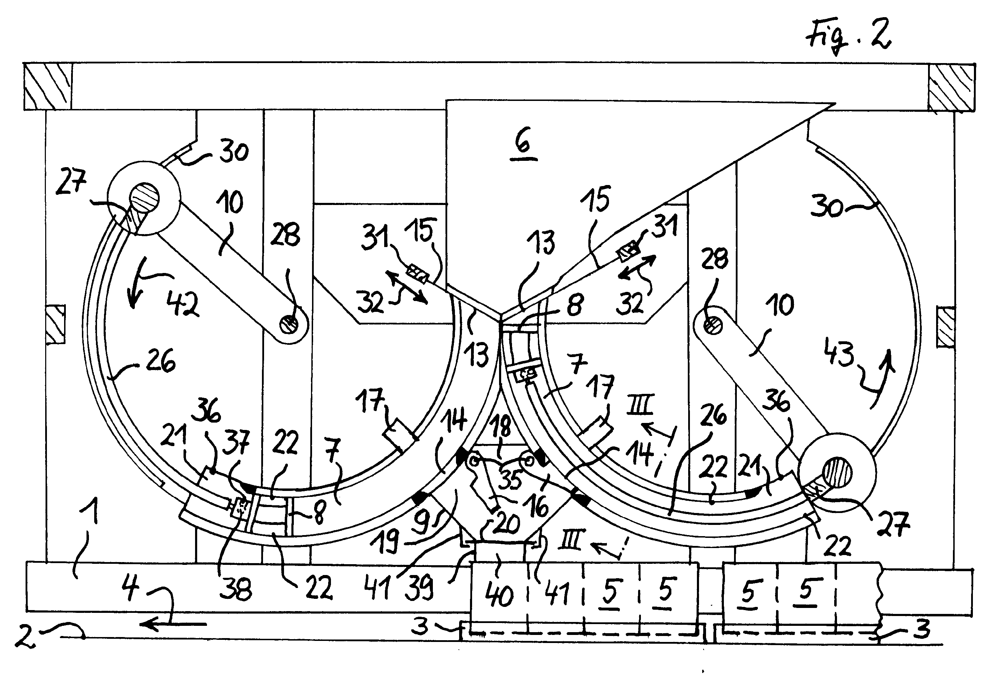

Die Paare auseinanderlaufender Dosierzylinder 7 sind nebeneinander in einer Reihe angeordnet, welche quer zur Transportbahn 2 und somit zur Vorschubrichtung 4 der Blockformen 3 verläuft, wobei die Reihe so viele Paare von Dosierzylindern 7 umfaßt, wie der Anzahl von Reihen von Käseformen 5 der Blockformen 3 entspricht. Der Auslauftrichter 9 erstreckt sich an allen V-förmigen Paaren von Dosierzylindern 7 zwischen der in Fig. 2 linken und der in Fig. 2 rechten Gruppe nebeneinander verlaufender Dosierzylinder 7 vorbei und ist durch Querwände 18 in mehrere Abteile 19 unterteilt, welche jeweils mit einer unteren Öffnung 20 versehen und einem Paar von Dosierzylindern 7 zugeordnet sind, die über die beiden Auslaßöffnungen 14 mit dem zugehörigen Abteil 19 kommunizieren.

An der quer zur Transportbahn 2 und somit zur Vorschubrichtung 4 der Blockformen 3 verlaufenden Reihe unterer Öffnungen 20 des Auslauftrichters 9 werden die Blockformen 3 schrittweis vorbeigeführt, um die vier

2

Querreihen von Käseformen 5 jeder Blockform 3 nacheinander mit Käsebruch aus dem Speisetrichter 6 zu füllen, wobei in jede Käseform 5 der jeweiligen Querreihe durch die zugehörige untere Öffnung 20 des Auslauftrichters 9 hindurch dieselbe vorgegebene Käsebruchmenge gelangt. Die Dosierzylinder 7 erstrecken sich aufgrund ihrer kreisbogenförmigen Krümmung trotz ihrer Länge nicht so weit auf die Transportbahn 2 zu, daß sie die Bewegung der Blockformen 3 behindern könnten, sondern verlaufen vielmehr oberhalb des Niveaus der unteren Öffnungen 20 des Auslauftrichters 9.

Die Dosierzylinder 7 sind jeweils kastenförmig ausgebildet und weisen jeweils zwei ringsegmentförmige Seitenwände 21 sowie zwei kreisbogenförmig gewölbte Seitenwände 22 auf, wobei alle ringsegmentförmigen Seitenwände 21 sowohl der in Fig. 2 linken als auch der in Fig. 2 rechten Gruppe neben einander verlaufender Dosierzylinder 7 mittels Querankern 23 miteinander verspannt sind und zwischen jedem Paar nebeneinander verlaufender Dosierzylinder 7 jeder Gruppe nur eine gemeinsame ringförmige Seitenwand 21 vorgesehen ist, welche auf beiden Seiten jeweils mit zwei Nuten 24 zur Aufnahme der angrenzenden Längskanten 25 der beiden kreisbogenförmig gewölbten Seitenwände 22 des einen bzw. des anderen Dosierzylinders 7 versehen ist. Nur die beiden äußeren ringsegmentförmigen Seitenwände 21 jeder Gruppe nebeneinander verlaufender Dosierzylinder 7 sind jeweils lediglich auf der Innenseite mit zwei derartigen Nuten 24 versehen, welche die angrenzenden Längskanten 25 der beiden kreisbogenförmig gewölbten Seitenwände 22 des von der jeweiligen äußeren Seitenwand 21 begrenzten Dosierzylinders 7 aufnehmen.

Jeder Gruppe nebeneinander verlaufender Dosierzylinder 7 sind eine Betätigungsschwinge 10 zur gleichzeitigen Bewegung aller ihrer Dosierkolben 8 und je zwei Drehmotore 12 zur gleichzeitigen Betätigung aller ihrer Querschieber 15 bzw. Schwenkklappen 16 zugeordnet. Die Dosierkolben 8 jeder Gruppe nebeneinander verlaufender Dosierzylinder 7 sind über je eine kreisbogenförmig gekrümmte Kolbenstange 26 mit einem Querbalken 27 der zugehörigen Betätigungsschwinge 10 verbunden, welche um eine zu den Dosierzylindern 7 und den jeweiligen Kolbenstangen 26 konzentrische Achse 28 am Gestell 1 drehbar gelagert und mit einem Ritzel 29 versehen ist, das von dem an der Betätigungsschwinge 10 angebrachten Elektromotor 11 angetrieben wird und mit einer zur Drehachse 28 koaxialen Zahnstange 30 kämmt, welche am Gestell 1 vorgesehen ist.

Die Querschieber 15 jeder Gruppe nebeneinander verlaufender Dosierzylinder 7 sind an einem Querbalken 31 angebracht, welcher im Gestell 1 quer beweglich geführt und mittels des den Querschiebern 15 zugeordneten Drehmotors 12 in Richtung des Doppelpfeils 32 hin- und herverschiebbar ist. Der Drehmotor 12 treibt ein Ritzel 33 an, welches mit einer Zahnstange 34 kämmt, die am Gestell 1 verschiebbar angeordnet und mit dem Querbalken 31 verbunden ist. Die Schwenkklappen 16 jeder Gruppe nebeneinander verlaufender Dosierzylinder 7 sind auf einer gemeinsamen Querwelle 35 befestigt, welche im Gestell 1 drehbar gelagert und mit dem zugehörigen Drehmotor 12 verbunden ist.

Die aus den Dosierzylindern 7 mit den Dosierkolben 8 und dem Auslauftrichter 9 bestehende Baueinheit ist im Gestell 1 lösbar befestigt und ihre Kolbenstangen 26, Querbalken 31 und Querwellen 35 sind mit der jeweiligen Betätigungsschwinge 10 bzw. deren Querbalken 27 bzw. mit dem jeweiligen Drehmotor 12 lösbar verbunden, um die Baueinheit im Bedarfsfall gegen eine entsprechende Baueinheit mit anders dimensionierten Dosierzylindern 7 auswechseln zu können. Darüber hinaus sind die Dosierkolben 8 zu Reinigungszwecken aus dem jeweiligen Dosierzylinder 7 an dessen dem Speisetrichter 6 abgewandten Ende herausnehmbar und mit der jeweiligen Kolbenstange 26 lösbar verbunden. Dazu ist jeder Dosierzylinder 7 an dem besagten Ende mit einer oberen Ausnehmung 36 und jeder Dosierkolben 8 kolbenstangenseitig mit einer oben offenen Tasche 37 zur Aufnahme eines Kugelkopfes 38 am benachbarten Ende der zugehörigen Kolbenstange 26 versehen.

Am Auslauftrichter 9 ist eine Formatplatte 39 mit mehreren jeweils an eine untere Öffnung 20 des Auslauftrichters 9 anschließenden und zu einer Käseform 5 jeder unter den Auslauftrichter 9 bewegten Querreihe einer Blockform 3 führenden Käsebruchleitkanälen 40 mittels federnder Halter 41 lösbar befestigt, um im Bedarfsfall gegen eine andere Formatplatte 39 mit anderen Käsebruchleitkanälen 40 ausgetauscht werden zu können, beispielsweise auch eine solche, bei welcher die Käsebruchleitkanäle 40 jeweils zwei oder mehr nebeneinanderliegende untere Öffnungen 20 des Auslauftrichters 9 mit einer entsprechend großen Käseform 5 verbinden, die dann also von entsprechend vielen Dosierzylindern 7 gespeist wird.

Die Vorrichtung funktioniert folgendermaßen. Auf die Transportbahn 2 werden leere Blockformen 3 aufgesetzt, um nacheinander in Richtung des Pfeils 4 zum Auslauftrichter 9 hin und schrittweise an den unteren Öffnungen 20 desselben vorbei bewegt zu werden, so daß eine Querreihe von Käseformen 5 der jeweiligen Blockform 3 nach der anderen unter die Käsebruchleitkanäle 40 der Formatplatte 39 gelangt, um mittels der einen bzw. der anderen Gruppe nebeneinander verlaufender Dosierzylinder 7 über den Auslauftrichter 9 mit Käsebruch aus dem Speisetrichter 6 befüllt zu werden, wobei jeder Käseform 5 der jeweiligen Querreihe dieselbe vorgegebene Käsebruchmenge zufließt. Der Speisetrichter 6 wird kontinuierlich oder diskontinuierlich mit Käsebruch beschickt, um stets mindestens soviel Käsebruch zu enthalten, wie zur Füllung einer Gruppe nebeneinander verlaufender Dosierzylinder 7 erforderlich.

Im dargestellten Fall soll die erste Querreihe von Käseformen 5 der ersten Blockform 3 auf der Transportbahn 2 gefüllt werden. Die Dosierkolben 8 der in Fig. 2 linken Gruppe nebeneinander verlaufender Dosierzylinder 7 befinden sich unmittelbar vor den oberen Ausnehmungen 36 an den dem Speisetrichter 6 abgewandten Enden der Dosierzylinder 7, deren Einlaßöffnungen 13 durch die zugehörigen Querschieber 15 verschlossen und in denen identische Käsebruchmengen aufgenommen sind, welche sich vor den Dosierkolben 8 unterhalb der Auslaßöffnungen 14 der Dosierzylinder 7 befinden. Deren Schwenkklappen 16 nehmen die Öffnungsstellung ein und geben die Auslaßöffnungen 14 frei.

Wenn nunmehr der Elektromotor 11 der in Fig. 2 linken Betätigungsschwinge 10 eingeschaltet wird und deren Ritzel 29 dreht, läuft dasselbe an der zugehörigen Zahnstange 30 entlang nach unten, so daß die Betätigungsschwinge 10 in Richtung des Pfeils 42 verschwenkt und die Dosierkolben 8 in den Dosierzylindern 7 auf den Speisetrichter 6 zu verschiebt. Die Dosierkolben 8 schieben ihrerseits den im jeweiligen Dosierzylinder 7 befindlichen Käsebruch durch dessen Auslaßöffnung 14 hindurch in das zugehörige Abteil 19 des Auslauftrichters 9, woraus er durch die untere Öffnung 20 des Abteils 19 hindurch über den damit fluchtenden Käsebruchleitkanal 40 der Formatplatte 39 in die auf den Käsebruchleitkanal 40 ausgerichtete Käseform 5 abläuft. Um das Gleiten des Käsebruchs im Auslauftrichter 9 und durch die Formatplatte 39 hindurch zu erleichtern sowie zu verhindern, daß an den Dosierkolben 8 Käsebruch haften bleibt, werden die Molkeeinsprühköpfe 17 zu einem geeigneten Zeitpunkt eingeschaltet. Nach dem Passieren der Auslaßöffnungen 14 laufen die Dosierkolben 8 weiter bis vor die Querschieber 15, so daß die Dosierzylinder 7 von neuem gefüllt werden können.

Während der Entleerung der in Fig. 2 linken Gruppe nebeneinander verlaufender Dosierzylinder 7 wird die in Fig. 2 rechte Gruppe nebeneinander verlaufender Dosierzylinder 7 gefüllt. Deren Dosierkolben 8 befinden sich an den dem Speisetrichter 6 benachbarten Enden der Dosierzylinder 7, deren Einlaßöffnungen 13 von den zugehörigen Querschiebern 15 freigegeben und deren Auslaßöffnungen 14 von den zugehörigen Schwenkklappen 16 verschlossen sind. Wenn nunmehr der Elektromotor 11 der zugehörigen Betätigungsschwinge 10 eingeschaltet wird, um deren Ritzel 29 so zu drehen, daß es an der zugehörigen Zahnstange 30 entlang nach oben läuft, verschwenkt die Betätigungsschwinge 10 in Richtung des Pfeils 43, um die Dosierkolben 8 in den Dosierzylindern 7 bis unmittelbar vor die oberen Ausnehmungen 36 an den dem Speisetrichter 6 abgewandten Enden derselben zu verschieben. Dabei läuft Käsebruch aus dem Speisetrichter 6 in jeden Dosierzylinder 7. Sobald die vorgegebene Menge erreicht ist, werden die Querschieber 15 betätigt, um die Einlaßöffnungen 13 der Dosierzylinder 7 zu verschließen.

## Patentansprüche

1. Vorrichtung zum dosierten Abfüllen von Käsebruch aus einem Speisetrichter (6) in eine Reihe einzelner Käseformen (5) mittels zweier Dosierzylinder (7) mit je einem Dosierkolben (8), welche wechselweise gefüllt und in eine Käseform (5) der schrittweise bewegten Käseformreihe entleert werden, dadurch **gekennzeichnet**, daß

a) die Dosierzylinder (7) vom unteren Ende des Speisetrichters (6) weg divergierend angeordnet sind,

b) ein Auslauftrichter (9) zwischen den Dosierzylindern (7) vorgesehen ist, an dessen unterer Öffnung (20) die Käseformen (5) vorbeilaufen, und

c) jeder Dosierzylinder (7) einerseits über eine verschließbare Einlaßöffnung (13) mit dem Speisetrichter (6) und andererseits über eine verschließbare Auslaßöffnung (14) mit dem Auslauftrichter (9) kommuniziert.

2. Vorrichtung nach Anspruch 1, dadurch **gekennzeichnet**, daß die Dosierzylinder (7) jeweils etwa auf halber Länge mit der Auslaßöffnung (14) versehen und die Dosierkolben (8) im jeweiligen Dosierzylinder (7) zum Käsebruchausschieben aus demselben in den Auslauftrichter (9) zunächst bis zu dem dem Speisetrichter (6) abgewandten Ende des Dosierzylinders (7) und dann wieder auf den Speisetrichter (6) zu verschiebbar sind.

3. Vorrichtung nach Anspruch 2, dadurch **gekennzeichnet**, daß die Dosierzylinder (7) sich oberhalb der unteren Öffnung (20) des Auslauftrichters (9) erstrecken und jeweils kreisbogenförmig gekrümmt sind.

4. Vorrichtung nach Anspruch 3, dadurch **gekennzeichnet**, daß die Dosierkolben (8) der Dosierzylinder (7) jeweils über eine kreisbogenförmig gekrümmte Kolbenstange (26) mit einer Betätigungsschwinge (10) verbunden sind, welche um eine zum jeweiligen Dosierzylinder (7) und zur Kolbenstange (26) konzentrische Achse (28) drehbar gelagert ist und ein mit einer zur Drehachse (28) koaxialen Zahnstange (30) kämmendes Ritzel (29) sowie einen Antriebsmotor (11) für das Ritzel (29) aufweist.

5. Vorrichtung nach Anspruch 4, dadurch **gekennzeichnet**, daß ein Elektromotor als Antriebsmotor (11) für das Ritzel (29) vorgesehen ist.

6. Vorrichtung nach einem der vorstehenden Ansprüche, dadurch **gekennzeichnet**, daß die Dosierzylinder (7) jeweils einen Querschieber (15) zum Verschließen der Einlaßöffnung (13) und eine Schwenkklappe (16) zum Verschließen der Auslaßöffnung (14) aufweisen, welche mittels je eines Motors (12) betätigbar sind, vorzugsweise eines pneumatischen Drehmotors oder eines Elektromotors.

7. Vorrichtung nach Anspruch 6, dadurch **gekennzeichnet**, daß der pneumatische Drehmotor oder Elektromotor (12) zur Betätigung des Querschiebers (15) mit demselben über ein Ritzel (33) und eine verschiebbare Zahnstange (34) zusammenwirkt, mit welcher das Ritzel (33) kämmt.

8. Vorrichtung nach einem der vorstehenden Ansprüche, dadurch **gekennzeichnet**, daß die Dosierzylinder (7) mit den Dosierkolben (8) und der Auslauftrichter (9) eine austauschbare Einheit bilden.

9. Vorrichtung nach Anspruch 8 in Verbindung mit Anspruch 6 oder 7, dadurch **gekennzeichnet**, daß der Querschieber (15) und die Schwenkklappe (16) jedes Dosierzylinders (7) mit dem jeweiligen Betätigungsmotor (12) lösbar verbunden sind.

10. Vorrichtung nach Anspruch 8 oder 9, dadurch **gekennzeichnet**, daß eine bzw. die Kolbenstange (26) jedes Dosierkolbens (8) mit einem Betätigungsglied bzw. mit der Betätigungsschwinge (10) lösbar verbunden ist.

11. Vorrichtung nach einem der vorstehenden Ansprüche, dadurch **gekennzeichnet**, daß die Dosierzylinder (7) jeweils mit einem Molkeeinsprühkopf (17) im Bereich der Auslaßöffnung (14) versehen sind.

12. Vorrichtung nach einem der vorstehenden Ansprüche, dadurch **gekennzeichnet**, daß die Dosierkolben (8) der Dosierzylinder (7) aus denselben an den dem Speisetrichter (6) abgewandten Enden herausnehmbar sind.

13. Vorrichtung nach Anspruch 12, dadurch **gekennzeichnet**, daß die Dosierkolben (8) jeweils mit einer bzw. der Kolbenstange (26) lösbar verbunden sind.

14. Vorrichtung nach einem der vorstehenden Ansprüche zum dosierten Abfüllen von Käsebruch in eine oder mehrere parallele Reihen einzelner Käseformen, **gekennzeichnet** durch mehrere Paare von Dosierzylindern (7), welche nebeneinander in einer quer zur Bewegungsrichtung (4) der Käseformen (5) verlaufenden Reihe angeordnet sind, wobei der Auslauftrichter (9) sich an allen Paaren von Dosierzylindern (7) vorbei erstreckt, durch Querwände (18) in mehrere jeweils einem Paar von Dosierzylindern (7) zugeordnete Abteile (19) unterteilt ist und je Abteil (19) eine untere Öffnung (20) aufweist.

15. Vorrichtung nach Anspruch 14, dadurch **gekennzeichnet**, daß die Dosierzylinder (7) jeweils kastenförmig ausgebildet sind.

16. Vorrichtung nach Anspruch 15 in Verbindung mit Anspruch 3, 4 oder 5, dadurch **gekennzeichnet**, daß die Dosierzylinder (7) jeweils zwei ringsegmentförmige Seitenwände (21) und zwei kreisbogenförmig gewölbte Seitenwände (22) aufweisen.

17. Vorrichtung nach Anspruch 15 oder 16, dadurch **gekennzeichnet**, daß jedes Paar nebeneinander verlaufender Dosierzylinder (7) eine gemeinsame Seitenwand (21) aufweist und die gemeinsame Seitenwand oder gemeinsamen Seitenwände (21) sowie die beiden dazu parallelen äußeren Seitenwände (21) jeder der beiden Gruppen nebeneinander verlaufender Dosierzylinder (7) mittels Querankern (23) miteinander verspannt sind, wobei die bzw. jede gemeinsame Seitenwand (21) auf jeder Seite und jede äußere Seitenwand (21) auf der Innenseite mit zwei Nuten (24) zur Aufnahme der angrenzenden Längskanten (25) der beiden zur gemeinsamen bzw. äußeren Seitenwand (21) senkrechten Seitenwände (22) des einen bzw. des anderen der beiden durch die gemeinsame Seitenwand (21) voneinander getrennten Dosierzylinder (7) bzw. des von der äußeren Seitenwand (21) begrenzten Dosierzylinders (7) versehen ist.

18. Vorrichtung nach Anspruch 14, 15, 16 oder 17, dadurch **gekennzeichnet**, daß die Dosierkolben (8) jeder Gruppe nebeneinander verlaufender Dosierzylinder (7) jeweils über eine bzw. die Kolbenstange (26) mit einem gemeinsamen Betätigungsglied bzw. mit einer gemeinsamen Betätigungsschwinge (10) verbunden sind.

19. Vorrichtung nach Anspruch 14, 15, 16, 17 oder 18 in Verbindung mit Anspruch 6, 7 oder 9, dadurch **gekennzeichnet**, daß die Querschieber (15) und die Schwenkklappen (16) jeder Gruppe nebeneinander verlaufender Dosierzylinder (7) mittels je eines gemeinsamen Motors (12) betätigbar sind.

20. Vorrichtung nach einem der Ansprüche 14 bis 19, dadurch **gekennzeichnet**, daß am Auslauftrichter (9) eine auswechselbare Formatplatte (39) mit Käsebruchleitkanälen (40) lösbar befestigt ist, welche entsprechend der jeweils gewünschten, in jede Käseform (5) der bzw. jeder Käseformreihe abzufüllenden Käsebruchmenge je eine untere Öffnung (20) oder je eine Gruppe mehrerer nebeneinanderliegender unterer Öffnungen (20) des Auslauftrichters (9) mit der bzw. einer Käseformreihe verbindet.


**Claims**

1. Apparatus for the metered delivery of curd from a feed funnel (6) into a row of individual cheese moulds (5) by means of two metering cylinders (7) each with a metering piston (8), which are alternately filled and emptied into a cheese mould (5) of the row of cheese moulds advanced step by step, characterised in that

EP 0 361 090 B1

a) the metering cylinders (7) are arranged diverging away from the lower end of the feed funnel (6),

b) between the metering cylinders (7) there is provided a delivery funnel (9), past the lower open end (20) of which the cheese moulds (5) pass, and

c) each metering cylinder (7) communicates on the one hand through a closable inlet opening (13) with the feed funnel (6) and on the other hand through a closable outlet opening (14) with the delivery funnel (9).

2. Apparatus according to claim 1, characterised in that the metering cylinders (7) are each provided with an outlet opening (14) about half way along their length and the metering pistons (8) in the respective metering cylinders (7) are, for discharging curd from them into the delivery funnel (9), displaceable first to that end of the metering cylinder which is furthest from the feed funnel (6) and then again towards the feed funnel (6).

3. Apparatus according to claim 2, characterised in that the metering cylinders (7) extend above the lower open end (20) of the delivery funnel (9) and are each curved in the form of an arc of a circle.

4. Apparatus according to claim 3, characterised in that the metering pistons (8) of the metering cylinders (7) are each connected through a respective arcuately curved piston rod (26) to an actuating arm (10) which is mounted to rotate about an axis (28) concentric with the respective metering cylinder (7) and piston rod (26) and which has a pinion (29) meshing with a toothed rack (30) coaxial with the axis of rotation (28) as well as a driving motor (11) for the pinion (29).

5. Apparatus according to claim 4, characterised in that an electric motor is provided as the motor (11) for driving the pinion (29).

6. Apparatus according to one of the foregoing claims, characterised in that the metering cylinders (7) each have a transvese slide (15) for closing off the inlet opening (13) and a pivoting flap (16) for closing off the outlet opening (14), actuated by means of a respective motor (12), preferably a pneumatic rotary motor or an electric motor.

7. Apparatus according to claim 6, characterised in that the pneumatic rotary motor or electric motor (12) for actuating the transverse slide (15) co-operates with it through a pinion (33) and a displaceable toothed rack (34) with which the pinion (33) meshes.

8. Apparatus according to one of the foregoing claims, characterised in that the metering cylinders (7) form with the metering pistons (8) and the delivery funnel (9) an exchangeable unit.

9. Apparatus according to claim 8 in conjunction with claim 6 or 7, characterised in that the transverse slide (15) and the pivoting flap (16) of each metering cylinder (7) are connected detachably to the respective actuating motor (12).

10. Apparatus according to claim 8 or 9, characterised in that a or the piston rod (26) of each metering piston (8) is detachably connected to an actuating member or to the actuating arm (10).

11. Apparatus according to one of the foregoing claims, characterised in that the metering cylinders (7) are each provided with a spray-in head (17) for whey in the region of the outlet opening (14).

12. Apparatus according to one of the foregoing claims, characterised in that the metering pistons (8) of the metering cylinders (7) are capable of removal from them at those ends which are furthest from the feed funnel (6).

13. Apparatus according to claim 12, characterised in that the metering pistons (8) are each connected detachably to a or the piston rod (26).

14. Apparatus according to one of the foregoing claims for the metered delivery of curd into one or more parallel rows of individual cheese moulds, characterised by a number of pairs of metering cylinders (7) which are arranged side by side in a row extending transverse to the direction of movement (4) of the cheese moulds (5), the delivery funnel (9) extending along all the pairs of metering cylinders (7), being divided by transverse walls (18) into a number of compartments (19) associated with respective pairs of metering cylinders (7), and each compartment (19) having a bottom opening (20).

15. Apparatus according to claim 14, characterised in that the metering cylinders (7) are each constructed of box-like form.

16. Apparatus according to claim 15 in conjunction with claim 3, 4 or 5, characterised in that the metering cylinders (7) each comprise two side walls (21) formed as segments of a ring and two curved side walls (22) shaped as arcs of a circle.

17. Apparatus according to claim 15 or 16, characterised in that each pair of adjacently arranged metering cylinders (7) has a common side wall (21) and the common side wall or common side walls (21) and the two outer side walls (21) parallel to them of each of the two groups of adjacently extending metering cylinders (7) are clamped together by means of transverse securing means (23), the or each common side wall (21) being provided on each side, and each outer side wall (21) on its inner face, with two grooves (24) for receiving the adjacent longitudinal edges (25) of the two side walls (22) extending perpendicular to the common or outer side wall (21) and belonging to the one or the other of the two metering cylinders (7) separated from one another

6

by the common side wall (21) or to the metering cylinder (7) limited by the outer side wall (21).

18. Apparatus according to claim 14, 15, 16 or 17, characterised in that the metering pistons (8) of each group of adjacently arranged metering cylinders (7) are connected respectively through a or the piston rod (26) to a common actuating member or to a common actuating arm (10).

19. Apparatus according to claim 14, 15, 16, 17 or 18 in conjunction with claim 6, 7 or 9, characterised in that the transverse slides (15) and the pivoting flaps (16) of each group of adjacently extending metering cylinders (7) are actuated by means of a respective common motor (12).

20. Apparatus according to one of claims 14 to 19, characterised in that there is detachably secured to the delivery funnel (9) an exchangeable format plate (39) with curd guide passages (40), which in accordance with the respective desired quantity of curd to be delivered into each cheese mould (5) of the or each row of cheese moulds connects a lower opening (20) or a respective group of several adjacent lower openings (20) of the delivery funnel (9) to the or a row of cheese moulds.

## Revendications

1. Dispositif pour débiter du caillé de fromagerie d'une trémie d'alimentation (6) à une rangée de formes de fromagerie distinctes (5), en quantités dosées, au moyen de deux cylindres de dosage (7) équipés chacun d'un piston de dosage (8), qui en alternance se remplissent puis se vident dans une forme de fromagerie (5) appartenant à la rangée de formes qui avance pas à pas, caractérisé en ce que

a) les cylindres de dosage (7) sont disposés de façon à diverger à partir de l'extrémité inférieure de la trémie d'alimentation (6),

b) une trémie de sortie (9) est prévue entre les cylindres de dosage (7), le long de l'ouverture inférieure (20) de laquelle les formes de fromagerie (5) circulent, et

c) chaque cylindre de dosage (7) communique, d'une part, avec la trémie d'alimentation (6) par l'intermédiaire d'une ouverture d'entrée obturable (13) et, d'autre part, avec la trémie de sortie (9), par l'intermédiaire d'une ouverture de sortie obturable (14).

2. Dispositif selon la revendication 1, caractérisé en ce que les cylindres de dosage (7) sont munis de l'ouverture de sortie (14) à peu près à leur mi-longueur et les pistons de dosage (8) peuvent se déplacer en translation chacun dans le cylindre de dosage (7) correspondant, pour expulser le caillé de fromagerie de ce cylindre dans la trémie de sortie (9), tout d'abord jusqu'à l'extrémité du cylindre de dosage (7) qui est la plus éloignée de la trémie d'alimentation (6) et ensuite vers la trémie d'alimentation (6).

3. Dispositif selon la revendication 2, caractérisé en ce que les cylindres de dosage (7) s'étendent au-dessus de l'ouverture inférieure (20) de la trémie de sortie (9) et sont incurvés chacun en arc de cercle.

4. Dispositif selon la revendication 3, caractérisé en ce que les pistons de dosage (8) des cylindres de dosage (7) sont reliés chacun par une tige de piston (26) incurvée en arc de cercle, à un bras oscillant d'actionnement (10) qui est monté pour tourner autour d'un axe (28) concentrique au cylindre de dosage (7) correspondant et à la tige de piston (26) correspondante, et présente un pignon (29) qui engrène avec une crémaillère (30) coaxiale à l'axe de rotation (28) ainsi qu'un moteur d'entraînement (11) qui attaque le pignon (29).

5. Dispositif selon la revendication 4, caractérisé en ce qu'il est prévu un moteur électrique en qualité de moteur d'entraînement (11) pour le pignon (29).

6. Dispositif selon une des revendications précédentes, caractérisé en ce que les cylindres de dosage (7) présentent chacun une coulisse transversale (15) servant à obturer l'ouverture d'entrée (13) et un volet oscillant (16) servant à obturer l'ouverture de sortie (14), cette coulisse et ce volet pouvant être actionnés chacun par un moteur (12), de préférence, par un moteur tourneur pneumatique ou par un moteur électrique.

7. Dispositif selon la revendication 6, caractérisé en ce que le moteur tourneur pneumatique ou le moteur électrique (12) servant à actionner la coulisse transversale (15) coopère avec cette dernière par l'intermédiaire d'un pignon (33) et d'une crémaillère (34) mobile en translation et avec laquelle le pignon (33) engrène.

8. Dispositif selon une des revendications précédentes, caractérisé en ce que les cylindres de dosage (7) forment une unité interchangeable en combinaison avec les pistons de dosage (8) et la trémie de sortie (9).

9. Dispositif selon la revendication 8, combinée avec la revendication 6 ou 7, caractérisé en ce que la coulisse transversale (15) et le volet oscillant (16) de chaque cylindre de dosage (7) sont reliés à leurs moteurs d'actionnement respectifs (12) par des liaisons démontables.

10. Dispositif selon la revendication 8 ou 9, caractérisé en ce qu'une tige de piston (26) ou la tige de piston (26) de chaque piston de dosage (8) est assemblée à un organe d'actionnement, ou au bras oscillant d'actionnement (10) par une liaison démontable.

11. Dispositif selon une des revendications précédentes, caractérisé en ce que les cylindres de dosage (7) sont munis chacun d'une tête (17) de pulvérisation de petit-lait dans la région de l'ouverture de sortie (14).

12. Dispositif selon une des revendications précédentes, caractérisé en ce que les pistons de dosage (8) des cylindres de dosage (7) peuvent être extraits des cylindres au droit des extrémités qui sont les plus éloignées de la trémie d'alimentation (6).

13. Dispositif selon la revendication 12, caractérisé en ce que les pistons de dosage (8) sont reliés chacun à une tige de piston (26) ou à la tige de piston (26) par une liaison démontable.

14. Dispositif selon une des revendications précédentes, destiné à transférer du caillé de fromagerie dans une ou plusieurs rangée (s) parallèle (s) de formes de fromagerie distinctes, caractérisé par plusieurs paires de cylindres de dosage (7) qui sont juxtaposées en une rangée qui s'étend transversalement à la direction du déplacement (4) des formes (5), la trémie de sortie (9) s'étendant le long de toutes les paires de cylindres de dosage (7) et étant divisée par des cloisons transversales (18) en plusieurs compartiments (19) dont chacun est associé à une paire de cylindres de dosage (7) et chaque compartiment (19) présentant une ouverture inférieure (20).

15. Dispositif selon la revendication 14, caractérisé en ce que les cylindres de dosage (7) sont réalisés chacun selon la forme d'une boîte.

16. Dispositif selon la revendication 15, en combinaison avec la revendication 3, 4 ou 5, caractérisé en ce que les cylindres de dosage (7) présentent chacun deux parois latérales (21) en forme de segment d'anneau et deux parois latérales (22) qui sont incurvées en arc de cercle.

17. Dispositif selon la revendication 15 ou 16, caractérisé en ce que chaque paire de cylindres de dosage juxtaposées (7) présente une paroi latérale commune (21) et la paroi latérale commune ou les parois latérales communes (21), ainsi que les deux parois latérales extérieures (21) parallèles à cette(s) paroi(s) de chacun des deux groupes de cylindres de dosage juxtaposés (7) sont serrées les unes contre les autres au moyen de tirants transversaux (23), la paroi latérale commune (21) ou chaque paroi latérale commune (21) étant munie, de chaque côté, et chaque paroi latérale (21) extérieure étant munie,sur la face intérieure, de deux rainures (24) destinées à recevoir les bords longitudinaux adjacents (25) des deux parois latérales (22), perpendiculaires à la paroi latérale commune (21) ou à la paroi latérale (21) extérieure, d'un ou de l'autre de deux cylindres de dosage (7) qui sont séparés l'un de l'autre par la paroi latérale commune (21), ou du cylindre de dosage (7) qui est limité par la paroi latérale (21) extérieure.

18. Dispositif selon l'une des revendications 14, 15, 16 et 17, caractérisé en ce que les pistons de dosage (8) de chaque groupe de cylindres de dosage (7) juxtaposés sont réunis chacun par une tige de piston (26) ou la tige de piston (26) à un organe d'actionnement commun ou à un bras oscillant d'actionnement commun (10).

19. Dispositif selon l'une des revendications 14, 15, 16, 17 et 18, en combinaison avec la revendication 6, 7 ou 9, caractérisé en ce que les coulisses transversales (15) et les volets oscillants (16) de chaque groupe de cylindres de dosage (7) juxtaposés peuvent être actionnés par un moteur (12) commun à toutes les coulisses et un moteur (12) commun à tous les volets oscillants.

20. Dispositif selon une des revendications 14 à 19, caractérisé en ce qu'à la trémie de sortie (9), est fixée, par des liaisons démontables, une plaque de format interchangeable (39) munie de canaux conducteurs du caillé (40), plaque qui, selon la quantité de caillé désirée à débiter dans chaque forme (5) de la rangée de formes ou de chaque rangée de formes, relie, soit une ouverture inférieure (20), soit un groupe de plusieurs ouvertures (20) juxtaposées de la trémie de sortie (9) à la rangée de formes ou à une rangée de formes.

Fig. 1

EP 0 361 090 B1

Fig. 2

EP 0 361 090 B1

_Fig. 3_

EP 0 361 090 B1